(19) Europäisches Patentamt
European Patent Office
Office européen des brevets

(11) **EP 2 469 086 A1**

(12) **EUROPEAN PATENT APPLICATION**
published in accordance with Art. 153(4) EPC

(43) Date of publication:
**27.06.2012 Bulletin 2012/26**

(51) Int Cl.:
*F03D 11/00* (2006.01)

(21) Application number: **09771647.6**

(22) Date of filing: **18.08.2009**

(86) International application number:
**PCT/JP2009/064424**

(87) International publication number:
**WO 2011/021270 (24.02.2011 Gazette 2011/08)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Mitsubishi Heavy Industries, Ltd.**
**Tokyo 108-8215 (JP)**

(72) Inventors:
• **SATO, Shinsuke**
**Nagasaki-shi**
**Nagasaki 851-0392 (JP)**

• **SHIRAISHI, Tatsuya**
**Nagasaki-shi**
**Nagasaki 851-0392 (JP)**

(74) Representative: **Intès, Didier Gérard André et al**
**Cabinet Beau de Loménie**
**158, rue de l'Université**
**75340 Paris Cedex 07 (FR)**

(54) **WIND POWER GENERATOR**

(57)    A fan cooler of a wind power generator that cools devices disposed in a nacelle (3) has an air intake port (11) formed in a nacelle shell (10) to introduce outside air into the nacelle, an outlet opening (12) provided in the nacelle shell (10) to discharge the air in the nacelle, an exhaust port (14) formed at the outlet of a duct (13) connected to the outlet opening (12) to discharge the air in the nacelle into the atmosphere, and a ventilating fan (15) disposed in the vicinity of the outlet opening (12) in the nacelle to suck outside air through the air intake port (11) and to discharge the air in the nacelle through the exhaust port (14); and a bypass passage (16) for returning part of the air to be discharged through the exhaust port (14) into the nacelle is provided downstream of the ventilating fan (15).

FIG. 1

**Description**

{Technical Field}

The present invention relates to a wind power generator in which devices disposed in a nacelle are cooled using a fan cooler.

{Background Art}

The outside air temperature of environments in which wind power generators are installed covers a wide range from about -30 °C to +40 °C. It is necessary to control the temperatures of the main internal devices, such as a main bearing, a gearbox, a generator, a transformer, and an inverter, within a standard temperature range.
An oil piping system for supplying lubricant oil to a hydraulic control system that constitutes the blade pitch system of turbine blades, a gearbox, and a main bearing and a cooling piping system for cooling an inverter are each equipped with heaters and fan coolers as actual temperature control systems. The ON/OFF states of the heaters and the fan coolers are controlled on the basis of set temperatures. Air intake and exhaust ports are provided in a nacelle shell.

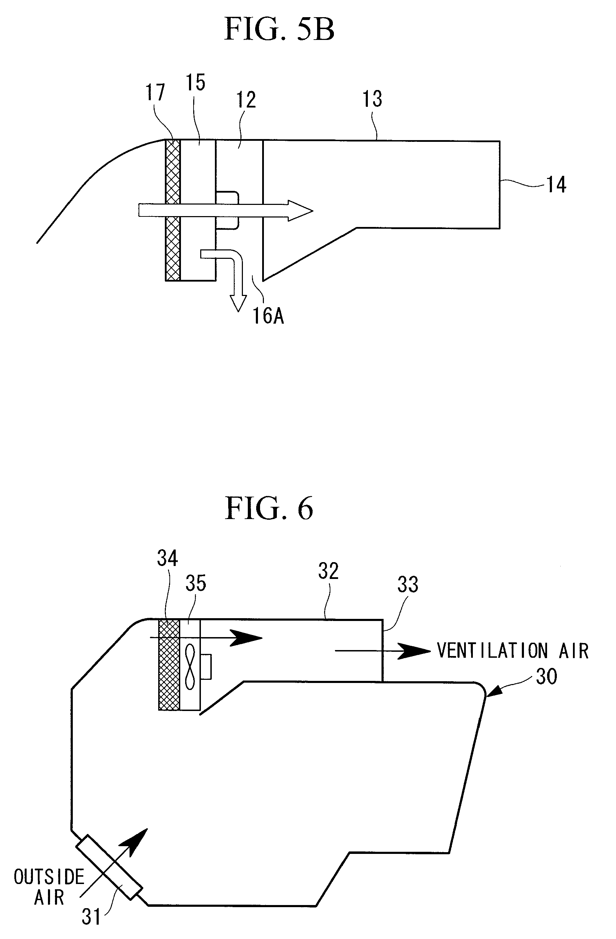

Fig. 6 is a sectional view showing, in outline, the configuration of a fan cooler that ventilates the interior of a nacelle 30 of the wind power generator for cooling the interior. The coolant of the fan cooler is air in the nacelle 30, and the internal devices are cooled using the temperature difference between the devices and the air.
The nacelle 30 has an air intake port 31 provided at the lower front end of the nacelle shell and an exhaust port 33 that is an outlet of a duct 32 provided at the top. The duct 32 is connected to an outlet opening 34 of the nacelle 30 at which a heat exchanger 34 and a ventilating fan 35 are disposed in this order from the upstream side. Accordingly, outside air serving as ventilation air is sucked into the nacelle 30 through the air intake port 31 by operating the ventilating fan 35. This ventilation air circulates in the nacelle 30 to ventilate the hot air, thereby decreasing the internal air temperature, and flows out from the exhaust port 33 through the heat exchanger 34, the ventilating fan 35, and the duct 32. At that time, in the heat exchanger 34, the ventilation air exchanges heat with a cooling medium (lubricant oil etc. that has increased in temperature) by circulating in the heat exchanger 34, thereby being cooled.
For conventional axial-flow fans, providing an opening and closing plate that is driven by a rack and pinion that is operatively connected to angle changing means of an inlet guide blade according to the flow rate has been proposed to prevent moving blades from losing speed and to avoid a decrease in efficiency even at a high flow rate. This opening and closing plate closes or opens the inlet at the front end of the moving blades in the circulation passage. (For example, refer to Patent Document 1.)

{Citation List}

{Patent Literature}

{PTL 1}
Japanese Unexamined Patent Application, Publication No. Hei 7-279896

{Summary of Invention}

{Technical Problem}

The above-described conventional wind power generator uses the same ventilating fan 35 when the outside temperature is high or low and controls the temperatures of the devices installed in the nacelle 30 by turning the ventilating fan 35 ON/OFF.
However, with the above-described fan cooler, when the outside air temperature is high, the interior cooling effect of the ventilating fan 35 is low because the temperature of the air in the nacelle 30, which is the coolant of the fan cooler, is also high.
On the other hand, at a low outside air temperature, the cooling effect of the ventilating fan 35 is high because the temperature of the air in the nacelle 30, which is the coolant of the fan cooler, is also low.
Accordingly, under an outside air temperature condition in which the installation environment of the wind power generator covers a wide range, the above-described operation control of the ventilating fan 35 is not always optimum. That is, it was difficult with the conventional fan cooler to efficiently cool the devices installed in the nacelle 30 under the wide range of outside air temperature conditions.

The present invention is made in consideration of the above circumstances, and it is an object thereof to provide a wind power generator capable of effectively cooling the devices in the nacelle using a fan cooler.

{Solution to Problem}

The present invention provides the following solutions to solve the above-described problems.
A wind power generator according to the present invention is a wind power generator equipped with a fan cooler that cools devices installed in a nacelle, wherein the fan cooler has an air intake port formed in a nacelle shell to introduce outside air into the nacelle, an outlet opening provided in the nacelle shell to discharge air in the nacelle, an exhaust port formed at an outlet of a duct connected to the outlet opening to discharge the air in the nacelle into atmosphere, and a ventilating fan disposed in a vicinity of the outlet opening in the nacelle to suck the outside air through the air intake port and to discharge the air in the nacelle through the exhaust port; and a bypass passage for returning part of the air to be discharged through the exhaust port into the nacelle is provided downstream of the ventilating fan.

With such a wind power generator, the fan cooler has an air intake port formed in a nacelle shell to introduce outside air into the nacelle, an outlet opening provided in the nacelle shell to discharge the air in the nacelle, an exhaust port formed at the outlet of a duct connected to the outlet opening to discharge the air in the nacelle into the atmosphere, and a ventilating fan disposed in the vicinity of the outlet opening in the nacelle to suck outside air through the air intake port and to discharge the air in the nacelle through the exhaust port; and a bypass passage for returning part of the air to be discharged through the exhaust port into the nacelle is provided downstream of the ventilating fan. This causes generation of an airflow returning backward into the nacelle. As a result, the amount of air in the nacelle discharged to the atmosphere through the exhaust port decreases and the amount of outside air introduced through the air intake port also decreases, and thus the negative pressure in the nacelle, which serves as resistance on the ventilating fan, is decreased, thereby increasing the fan airflow.

In the above-described wind power generator, it is preferable that a passage cross-sectional area of the bypass passage be variable. This allows the passage cross-sectional area to be adjusted depending on the season or the installation environment to optimize the fan airflow.
In the above-described wind power generator, it is preferable that the bypass passage be a gap formed between the outlet of the ventilating fan and the duct. This allows the bypass passage to be easily formed. The passage cross-sectional area of the gap serving as the bypass passage can be adjusted by, for example, attaching or detaching a member for filling the gap, sliding the installation position of a member for filling the gap, or sliding the installation position of the ventilating fan itself.

{Advantageous Effects of Invention}

The above-described wind power generator of the present invention is provided with the bypass passage for returning part of the air to be discharged through the exhaust port into the nacelle. This causes generation of an airflow returning backward into the nacelle. As a result, the amount of air in the nacelle discharged to the atmosphere through the exhaust port decreases and the amount of outside air introduced through the air intake port also decreases. Therefore, the negative pressure in the nacelle, which serves as resistance on the ventilating fan, is decreased, thereby increasing the fan airflow.
Accordingly, in an installation environment in which the outside air temperature is high, the cooling capacity in the interior of the nacelle is increased due to an increase in the fan airflow and, in an installation environment in which the outside air temperature is low, such as a cold region, because the air temperature in the nacelle is low from the outset, the air that has flowed backward into the nacelle does not affect the cooling capacity. Accordingly, the wind power generator installed under a wide range of outside air temperature conditions can efficiently perform cooling of the devices in the nacelle using the fan cooler.
Moreover, an increase in the fan airflow due to a decrease in the negative pressure in the nacelle can reduce the operating time of the ventilating fan; therefore, the power generation level of the wind power generator can be increased by an amount corresponding to the decrease in the power consumption required for operating the fan, thereby allowing the efficiency to be improved.

{Brief Description of Drawings}

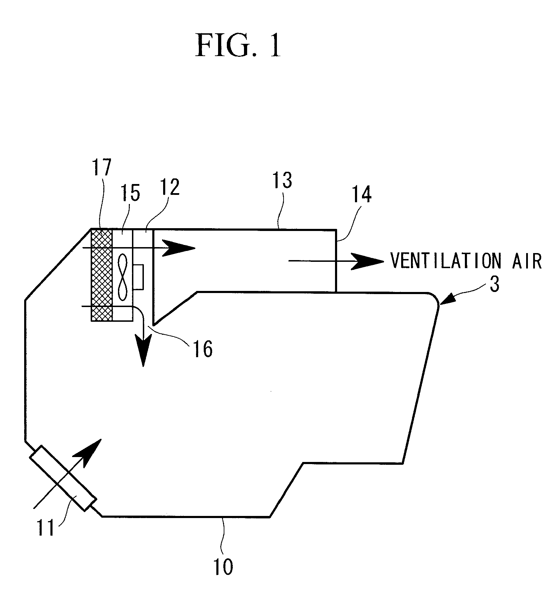

{Fig. 1}
Fig. 1 is a sectional view of the interior of a nacelle, showing a configuration example of a fan cooler that cools the interior of the nacelle by ventilation, as an embodiment of a wind power generator according to the present invention.

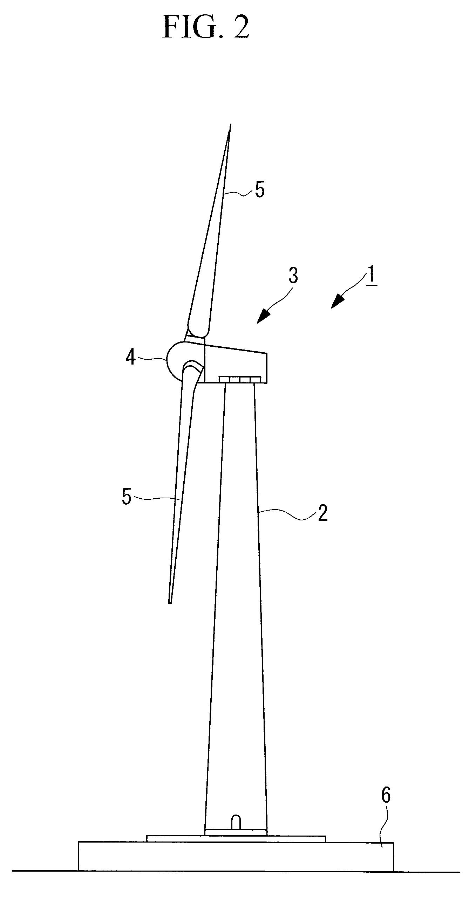

{Fig. 2}
Fig. 2 is a side view showing, in outline, the wind power generator.
{Fig. 3}
Fig. 3 is a sectional view of the interior of the nacelle, showing, in outline, a concrete arrangement of the main devices and a cooling system disposed in the nacelle.
{Fig. 4}
Fig. 4 is a diagram showing the relationship between a fan performance (P - Q) curve and a nacelle pressure loss characteristic.
{Fig. 5A}
Fig. 5A is a sectional view of a relevant part showing a configuration example of a bypass passage having a variable passage cross-sectional area as another embodiment, showing a case in which the passage cross-sectional area is totally closed to zero.
{Fig. 5B}
Fig. 5B is a sectional view of a relevant part showing a configuration example of the bypass passage having a variable passage cross-sectional area as another embodiment, showing a case in which the passage cross-sectional area is fully opened.
{Fig. 6}
Fig. 6 is a sectional view showing a conventional configuration of a fan cooler that cools the interior of the nacelle of the wind power generator by ventilation.

{Description of Embodiments}

An embodiment of a wind power generator according to the present invention will be described below with reference to Figs. 1 to 3.
A wind power generator 1 shown in Fig. 2 includes a support pillar (also referred to as "tower") 2, a nacelle 3 mounted on the upper end of the tower 2, and a rotor head 4 mounted on the nacelle 3 so as to be rotatably supported about the substantially horizontal axis thereof.
The rotor head 4 has a plurality of (for example, three) wind-turbine rotor blade 5 mounted in a radial pattern about its rotation axis. Thus, the force of wind blowing against the wind-turbine rotor blades 5 from the direction of the rotation axis of the rotor head 4 is converted to motive power that rotates the rotor head 4 about the rotation axis.
Such a wind power generator 1 is provided with a fan cooler that cools devices disposed in the nacelle 3.
The fan cooler shown in Fig. 1 is provided with an air intake port 11 formed in a nacelle shell 10 to introduce outside air into the nacelle; an outlet opening 12 provided in the nacelle shell 10 to discharge the air in the nacelle; an exhaust port 14 formed at the outlet of a duct 13 connected to the outlet opening 12 to discharge the air in the nacelle to the atmosphere; and a ventilating fan 15 which is disposed in the vicinity of the outlet opening 12, inside the nacelle, and which sucks outside air through the air intake port 11 and discharges the air in the nacelle through the exhaust port 14.
The present invention is provided with a bypass passage 16, such as a gap or an opening, downstream of the ventilating fan 15, to return part of the air to be discharged through the exhaust port 14 into the nacelle.
The fan cooler having the above-described configuration sucks outside air that is lower in temperature than the air in the nacelle through the air intake port 11 by operating the ventilating fan 15. This outside air circulates in the nacelle 3 to function as ventilation air that cools the devices in the nacelle by air cooling. In the configuration example shown in Fig. 1, a heat exchanger 17 for a lubricant oil system is disposed upstream of the ventilating fan 15. Therefore, the ventilation air that is discharged through the exhaust port 14 to the atmosphere passes through the heat exchanger 17 and exchanges heat with hot lubricant oil flowing in the heat exchanger 17 to cool the devices.
The above-described fan cooler is provided with the bypass passage 16 for returning part of the ventilation air that has increased in temperature by circulating in the nacelle into the nacelle 3. Therefore, an airflow that is part of the ventilation air flowing backward into the nacelle is generated in the nacelle 3.
This results in a decrease in the amount of ventilation air in the nacelle discharged to the atmosphere through the exhaust port 14 and also in the amount of outside air introduced through the air intake port 11; therefore, the negative pressure in the nacelle, which serves as resistance on the ventilating fan 15, decreases, thereby increasing the fan airflow. Such an increase in the fan airflow allows ventilation of the interior of the nacelle 3 to increase the cooling capacity. Such improvement in the cooling capacity due to the increase in the fan airflow can reduce the operating time of the ventilating fan 15, thus increasing the power generation level by the amount of power consumed in the operation of the ventilating fan 15, and thus, this is effective also in improving the generation efficiency of the wind power generator 1.
Accordingly, in an installation environment in which the outside air temperature is high, the cooling capacity in the interior of the nacelle increases due to an increase in the fan airflow. On the other hand, in an installation environment in which the outside air temperature is low, such as in a cold region, because the air temperature in the nacelle is low from the outset, the air that has flowed backward into the nacelle does not affect the cooling capacity.

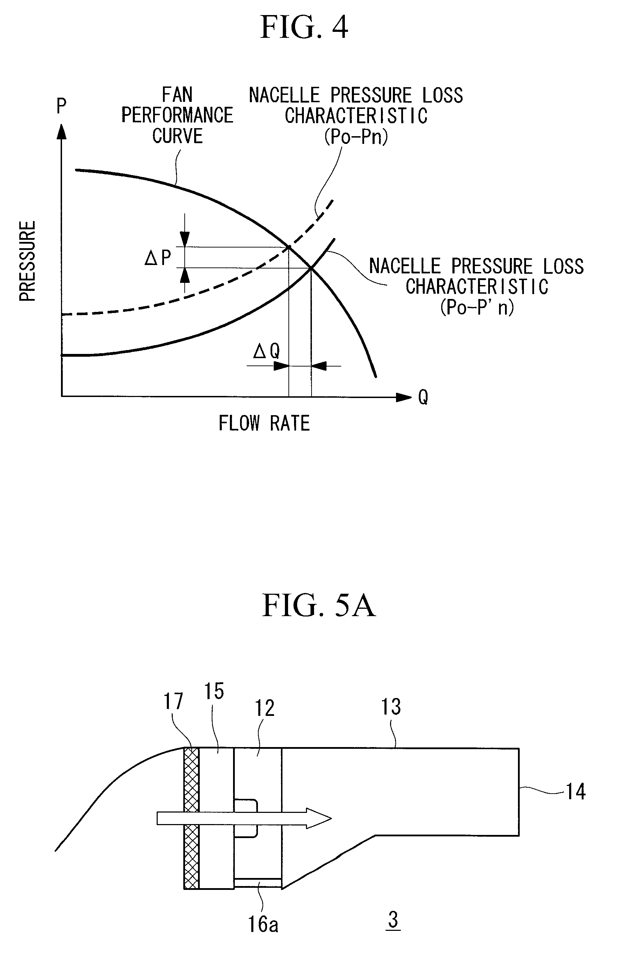

That is, the above-described increase in fan airflow can be described using a fan performance curve (a curve showing the relationship between pressure P and flow rate Q) shown in Fig. 4. In this graph, when the nacelle pressure loss characteristic changes from the state indicated by the broken line (Po - Pn) to the state indicated by the solid line (Po - P'n), the ventilating fan 15 decreases the pressure P by ΔP and increases the flow rate Q by ΔQ.

Here, with the configuration in Fig. 6, shown as related art, the nacelle pressure loss characteristic (Po - Pn) indicated by the broken line in Fig. 4 can be obtained using a pressure balance equation shown in {Eq. 1}, where Q is the total fan airflow that is sucked through the air intake port 31 and is discharged through the exhaust port 33, Po is the pressure outside the nacelle 30 (atmospheric pressure), Pn is the pressure inside the nacelle 30, Ain is the inlet area of the air intake port 31, and ζin is the resistance coefficient of the inlet of the air intake port 31.

{Eq. 1}

$$P_0 - P_n = \frac{1}{2} \zeta_{in} P_0 \left( \frac{Q}{A_{in}} \right)^2$$

Q: total fan airflow
Ain: inlet area
ζin: resistance coefficient of the inlet

The nacelle pressure loss characteristic (Po -P'n) indicated by the solid line in Fig. 4 can be obtained using a pressure balance equation shown in {Eq. 2}. With the configuration in Fig. 1, shown as an embodiment of the present invention, the total fan airflow discharged through the exhaust port 14 can be expressed as (Q - q), where Q' is the airflow sucked through the air intake port 11 and q is the bypass airflow returned into the nacelle through the bypass passage 16. Thus, the balance equation can be expressed as {Eq. 2} shown below, where Po is the pressure outside the nacelle 3 (atmospheric pressure), P'n is the pressure inside the nacelle 3, Ain is the inlet area of the air intake port 11, and ζin is the resistance coefficient of the inlet of the air intake port 11.

{Eq. 2}

$$P_0 - P_n' = \frac{1}{2} \zeta_{in} P_0 \left( \frac{Q'-q}{A_{in}} \right)^2$$

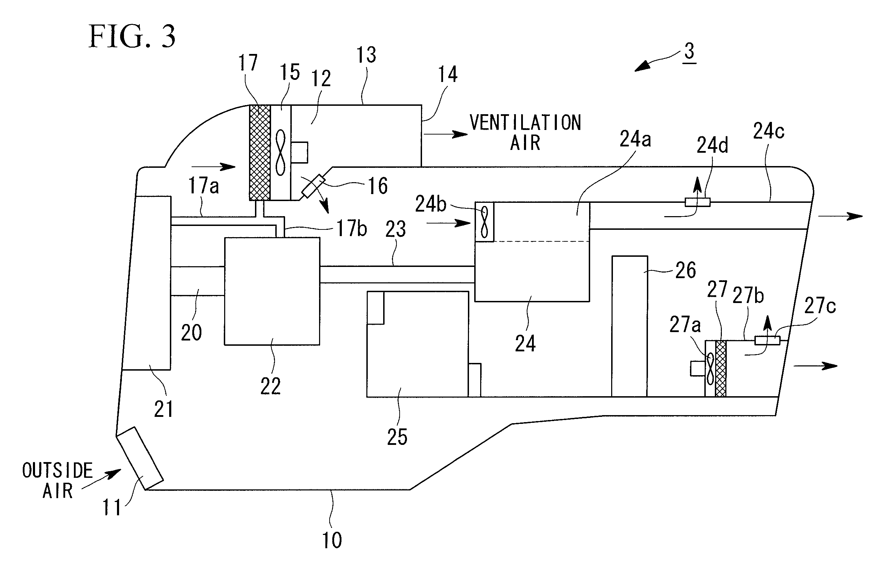

The sectional view shown in Fig. 3 is a configuration diagram showing an example of a concrete arrangement of the main devices and the cooling system disposed in the nacelle 3.

The nacelle 3 is provided with the air intake port 11 formed at the lower end of the nacelle shell 10 and the outlet opening 12 formed at the top of the nacelle shell 10. The duct 13 is connected to this outlet opening 12, and the outlet of the duct 13 serves as the exhaust port 14 for discharging the air in the nacelle to the atmosphere. The bypass passage 16 for returning part of the air to be discharged through the exhaust port 14 into the nacelle is provided downstream of the ventilating fan 15.

The nacelle 3 accommodates, in the interior thereof, a main bearing 21 that supports a main shaft 20 that rotates together with the rotor head 4. The rotation of the main shaft 20 drives a generator 24 through an output shaft 23 of a gearbox 22. The main bearing 21, the gearbox 22, and the generator 24 increase in temperature due to frictional heat generated at the sliding portions etc. of the rotating portions, thus requiring to be cooled by lubricant oil or air.

The nacelle 3 also accommodates heating devices, such as a control panel 25 and an inverter 26. Such heating devices need to be cooled by air cooling or the like.

To cool the devices installed in the nacelle 3, ventilation air, which is outside air introduced through the air intake port 11, circulating in the nacelle, and discharged through the exhaust port 14, is used. This ventilation air cools the devices by air cooling in such a manner that outside air sucked through the air intake port 11 circulates in the nacelle 3 until it is discharged through the exhaust port 14 by operating the ventilating fan 15 disposed in the vicinity of the outlet opening 12 in the nacelle.

Describing this more specifically, the outside air introduced through the air intake port 11 serves as ventilation air that circulates in the nacelle 3 and is discharged through the exhaust port 14. This ventilation air exchanges heat with lubricant oil to cool the hot lubricant oil by passing through the heat exchanger (lubricant-oil cooling radiator) 17 that is installed in the lubricant oil system that supplies lubricant oil to the main bearing 21 and the gearbox 22. Reference numerals 17a and 17b in the drawing denote lubricant oil passages in the lubricant oil system that connect the heat exchanger 17, the main bearing 21, and the gearbox 22.

The generator 24 is cooled by air cooling using the ventilation air in the nacelle 3. In the configuration example shown in the drawing, the generator 24 is equipped with a generator cooler 24a. The generator cooler 24a operates a cooler fan 24b to introduce the ventilation air in the nacelle 3. This ventilation air cools the generator 24 in necessary portions thereof and is thereafter directly discharged to the outside of the nacelle 3 through a duct 24c. Such a cooling system of the generator 24 may have a bypass passage 24d for returning part of the ventilation air that has increased in temperature after cooling back to the nacelle 3 side by forming a gap, an opening, or the like at an appropriate location of the duct 24c.

The cooling of the inverter 26 is performed by an inverter cooler 27. This inverter cooler 27 drives the cooler fan 27a to introduce the ventilation air in the nacelle 3, thereby exchanging heat with the coolant of an inverter cooling system that circulates through the inverter cooler 27. As a result, the coolant that has become hot by cooling the inverter 27 is cooled by the ventilation air and is directly discharged to the outside of the nacelle 3 through a duct 27b. Also in such cooling of the coolant of the inverter 26, a bypass passage 27c for returning part of the ventilation air that has increased in temperature after cooling back to the nacelle 3 side may be provided by forming a gap, an opening, or the like at an appropriate location of the duct 27b.

The control panel 25 may also be cooled by supplying the ventilation air to required portions in the panel.

Thus, the wind power generator 1 of the present invention is provided with a gap or an opening that forms the bypass passage 16 so that the exhaust air from the ventilating fan 15 generates a flow toward the outside air through the duct 13 and a flow flowing backward into the nacelle 3, and therefore the outside air introduced through the air intake port 11 serves as the ventilation air flowing through the interior of the nacelle 3, and furthermore passes through the heat exchanger 17 and the ventilating fan 15 to increase in temperature. The ventilation air that has thus increased in temperature is partially returned to the inner space of the nacelle 3 to recirculate.

In a case where the thus-configured wind power generator 1 is installed in a cold region, even if the ventilation air in the nacelle 3 that is heated through the ventilating fan 15 flows backward again into the nacelle 3, there is no practical problem in the cooling capacity of the ventilating fan 15 because the initial temperature of the air in the nacelle, which is coolant, is low. Oils, such as lubricant oil, that increase in viscosity at a low temperature can be heated by recirculating the air with an increased temperature into the nacelle 3.

Although the bypass passage 16 of the above-described embodiment has a fixed passage cross-sectional area determined by the gap or opening, another embodiment shown in Figs. 5A and 5B adopts a bypass passage 16A whose passage cross-sectional area is variable.

That is, the variable passage cross-sectional area of the bypass passage 16A allows the passage cross-sectional area to be appropriately adjusted depending on the season or the installation environment to optimize the fan airflow of the ventilating fan 15.

In summer, when the outside air temperature is high, the passage cross-sectional area is totally closed to zero by closing the bypass passage 16A, as shown in Fig. 5A, for example. As a result, the high-temperature ventilation air does not flow backward into the nacelle 3, thus allowing the devices to be efficiently cooled by relatively low-temperature outside air and ventilation air.

On the other hand, in winter, when the outside temperature is low, the bypass passage 16A is fully opened, as shown in Fig. 5B, for example. As a result, part of the ventilation air with an increased temperature flows backward into the nacelle 3 to recirculate, thus allowing the fan airflow of the ventilating fan 15 to be increased and the lubricant oil that has high viscosity at low temperatures to be heated.

It is preferable that the above-described bypass passages 16 and 16A be gaps formed between the outlet of the ventilating fan 15 and the duct 13 communicating with the interior of the nacelle 3. Such gap bypass passages 16 and 16A can easily be formed, for example, by partially cutting out the lower end of the duct 13.

The bypass passage 16A having a variable passage cross-sectional area can be of a detachable type in which a member that fills the gap is fixed with a bolt or the like, for example, like a lid member 16a shown in Fig. 5A. In this case, the lid member 16a may be divided into a plurality of pieces, and a plurality of steps of passage cross-sectional areas can be set depending on the number of the pieces of the lid member 16a to be fixed.

The above-described bypass passage 16A having a variable passage cross-sectional area may adopt a sliding type in which a member that fills the gap is moved along a guide or the like to allow the cross-sectional area to be adjusted in steps or continuously within a predetermined range, or alternatively, a fan sliding type in which the installation position of the ventilating fan 15 is moved on a rail or the like to allow the cross-sectional area to be adjusted in steps or continuously within a predetermined range.

The present invention is not limited to the above-described embodiments, and various modifications may be made without departing from the spirit of the present invention.

{Reference Sign List}

| 1: | wind power generator |
| 3: | nacelle |
| 4: | rotor head |
| 5: | wind-turbine rotor blade |
| 10: | nacelle shell |
| 11: | air intake port |
| 12: | outlet opening |
| 13: | duct |
| 14: | exhaust port |
| 15: | ventilating fan |
| 16, 16A: | bypass passage |

**Claims**

1. A wind power generator equipped with a fan cooler that cools devices installed in a nacelle, wherein
   the fan cooler has an air intake port formed in a nacelle shell to introduce outside air into the nacelle, an outlet opening provided in the nacelle shell to discharge air in the nacelle, an exhaust port formed at an outlet of a duct connected to the outlet opening to discharge the air in the nacelle into atmosphere, and a ventilating fan disposed in a vicinity of the outlet opening in the nacelle to suck the outside air through the air intake port and to discharge the air in the nacelle through the exhaust port; and
   a bypass passage for returning part of the air to be discharged through the exhaust port into the nacelle is provided downstream of the ventilating fan.

2. The wind power generator according to Claim 1, wherein a passage cross-sectional area of the bypass passage is variable.

3. The wind power generator according to Claim 1 or 2, wherein the bypass passage is a gap formed between the outlet of the ventilating fan and the duct.

# FIG. 1

VENTILATION AIR

# FIG. 2

FIG. 3

OUTSIDE AIR

VENTILATION AIR

EP 2 469 086 A1

# FIG. 4

FAN PERFORMANCE CURVE

NACELLE PRESSURE LOSS CHARACTERISTIC ($Po-Pn$)

NACELLE PRESSURE LOSS CHARACTERISTIC ($Po-P'n$)

P

PRESSURE

$\Delta P$

$\Delta Q$

Q

FLOW RATE

# FIG. 5A

17  15  12  13

14

16a  3

# FIG. 5B

17  15  12  13

14

16A

# FIG. 6

34  35  32  33

VENTILATION AIR

30

OUTSIDE
AIR

31

## INTERNATIONAL SEARCH REPORT

| International application No. |
|---|
| PCT/JP2009/064424 |

A. CLASSIFICATION OF SUBJECT MATTER
F03D11/00(2006.01)i

According to International Patent Classification (IPC) or to both national classification and IPC

B. FIELDS SEARCHED

Minimum documentation searched (classification system followed by classification symbols)
F03D11/00, H02K5/20, H02K7/14

Documentation searched other than minimum documentation to the extent that such documents are included in the fields searched
Jitsuyo Shinan Koho        1922–1996   Jitsuyo Shinan Toroku Koho   1996–2009
Kokai Jitsuyo Shinan Koho  1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 58-065977 A (Hitachi, Ltd.),<br>19 April, 1983 (19.04.83),<br>Page 2, left column, line 4 to right column,<br>line 12; Figs. 1, 2<br>(Family: none) | 1,3<br>2 |
| A | JP 2008-286115 A (Mitsubishi Heavy Industries, Ltd.),<br>27 November, 2008 (27.11.08),<br>Par. Nos. [0004], [0027] to [0033]; Figs. 5 to 9<br>& WO 2008/142947 A1 | 1-3 |

☐ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 September, 2009 (29.09.09) | Date of mailing of the international search report<br>13 October, 2009 (13.10.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 469 086 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7279896 B